# EUROPEAN PATENT SPECIFICATION

(11) **EP 2 639 146 B1**
(45) Date of publication and mention of the grant of the patent: **14.05.2014**
(21) Application number: 12190547.5
(22) Date of filing: 30.10.2012
(51) Int. Cl.: B62J 17/00, B62J 37/00, F02M 37/00

(54) **Straddle-type vehicle**
Grätschsitz-Fahrzeug
Véhicule de type à enfourcher

(30) Priority: 15.03.2012 JP 2012059425
(43) Date of publication of application: 18.09.2013
(73) Proprietor: Yamaha Hatsudoki Kabushiki Kaisha, Iwata-shi, Shizuoka 438-8501 (JP)
(72) Inventor: Wakano, Taisuke, Iwata-shi, Shizuoka 438-8501 (JP)
(74) Representative: Grünecker, Kinkeldey, Stockmair & Schwanhäusser

(56) References cited:
- EP-A1- 1 775 207
- EP-A2- 2 353 982
- JP-B- 4 176 456

## Description

**The present invention relates to a straddle-type vehicle according to the preamble of independent claim 1. Such a straddle-type vehicle can be taken from the prior art document** JP 4,176,456 B**.**

In JP 4,176,456, there is disclosed a straddle-type vehicle (more specifically, a motorcycle) whose vehicle body frame has a main frame which extends diagonally downward toward the rear from a head pipe that supports a steering shaft, and a pair of left and right rear frames which connects with the rear portion of the main frame and extends diagonally upward and rearward from the rear portion of the main frame. The front portion of the rear frame extends diagonally toward the outside in the direction corresponding to the vehicle width (vehicle width direction). An engine is disposed below the main frame. A fuel tank is supported by the left and right rear frames. A fuel hose which connects a fuel discharge portion provided on the fuel tank and a fuel supply unit of the engine (such as an injector) is clamped to the vehicle body frame.

According to the structure of the motorcycle disclosed in JP 4,176,456, the front portion of the rear frame extend diagonally toward the outside in the vehicle width direction from the main frame. The motorcycle shown in this document is so constructed that the fuel hose is clamped to both the rear frame and the main frame and extends along these frames. In this structure, the fuel hose bends at the connection position between the rear frames and the main frame, wherefore the length of the fuel hose is large by the bend. In view of the flow efficiency of fuel within the fuel hose, it is preferable that the fuel hose extends in a direction close to a linear direction.

An object according to an aspect of the invention is to provide a straddle-type vehicle capable of reducing a bend of a fuel hose without requiring a complicated structure. According to the present invention said object is solved by a straddle-type vehicle having the features of independent claim 1. Preferred embodiments are laid down in the dependent claims.

A straddle-type vehicle according to an example includes: a front frame extending diagonally downward and rearward from a head pipe supporting a steering shaft and forming a front part of a vehicle body frame; left and right rear frames forming a rear part of the vehicle body frame and extending diagonally upward and rearward, wherein the left and right rear frames each includes a front end connected with a rear part of the front frame and a front part extending diagonally rearward toward the outside in the vehicle width direction, and are located away from each other in the vehicle width direction; a fuel tank supported by the left and right rear frames; a fuel supply unit which supplies fuel to an engine disposed below the front frame; a fuel hose connecting a fuel discharge portion of the fuel tank and the fuel supply unit, the fuel hose including a first portion that extends along one of the left and right rear frames and a second portion that corresponds to a portion between the first portion and the fuel supply unit; and a vehicle body cover provided with a clamp clamping the second portion of the fuel hose at a position located away from the front frame toward the outside in the vehicle width direction.

According to the straddle-type vehicle having the above structure, a bend of the fuel hose decreases in comparison with a structure which attaches the fuel hose to the front frame and positions the fuel hose along the front frame and the front part of the rear frame.

The straddle-type vehicle according to an embodiment includes a motorcycle and a motor tricycle. The motorcycle includes a type which has an engine disposed below a front frame that extends downward toward the rear from a head pipe supporting a steering shaft (under-bone type).

According to an example, the vehicle body cover may include a first cover and a second cover connected with each other, the first cover may include a portion covered by the second cover, and the clamp may be provided on the portion of the first cover covered by the second cover. According to this example, an operator who removes the vehicle body cover can visually recognize the clamp on the first cover by removing the second cover. As a result, the operator can easily remove the fuel hose from the clamp when removing the vehicle body cover from the vehicle body.

According to an example, the portion of the first cover may correspond to the end of the first cover toward the second cover. The structure of this example can further facilitate visual recognition of the clamp on the first cover by the operator who removes the vehicle body cover.

According to an example, the second cover may be removable from a vehicle body in a state where the first cover remains attached to the vehicle body. According to this example, the second cover can be removed without removing the fuel hose from the clamp of the first cover. Moreover, the clamp of the first cover can be visually recognized by removal of the second cover. Therefore, efficiency in a process of removing the vehicle body cover can be increased

According to an example, the front frame may include a bracket which extends toward the outside in the vehicle width direction, and the end of the first cover may be fixed to the bracket. According to this example, the stability of the clamp for supporting the fuel hose can be increased.

According to an example, the front frame may include an engine bracket supporting the engine, the fuel supply unit may be located further forward than the engine bracket in the side view, and the clamp may be located further rearward than the engine bracket in the side view. According to this example, a space necessary for carrying out attachment and detachment of the fuel hose can be easily secured in comparison with a structure which disposes the clamp at a position overlapping with the engine bracket in the side view. Moreover, it is possible to easily adjust the position of the clamp.

According to an example, the one rear frame along which the first portion of the fuel hose extends may include a first clamp clamping the first portion of the fuel hose. The vehicle body cover may include, as a second clamp, the clamp which clamps the second portion of the fuel hose. The second clamp may be located toward the fuel supply unit from the intermediate position between the first clamp and the fuel supply unit. According to this example, position change of the fuel hose in the vicinity of the fuel supply unit can be more effectively prevented.

According to an example, the second clamp may be located laterally from the front end of the one rear frame. In this example, the fuel hose extends along the rear frame in the side view, and is thus difficult to interfere with other units.

According to an example, the clamp of the vehicle body cover may be located further inwardly in the vehicle width direction than side surfaces of a crank case of the engine. According to this example, the lower side of the fuel hose is protected from an external force. Moreover, this structure can reduce the distance between the fuel supply unit and the portion of the fuel hose held by the clamp, thereby preventing large inclination or bending of the fuel hose.

### BRIEF DESCRIPTION OF THE DRAWINGS

FIG. 1 is a side view of a motorcycle according to an embodiment.
FIG. 2 is a side view illustrating a supporting structure of a fuel hose included in the motorcycle.
FIG. 3 is a perspective view illustrating the supporting structure of the fuel hose.
FIG. 4 is a plan view illustrating the supporting structure of the fuel hose.
FIG. 5 is a plan view of a fuel tank and a storing box, illustrating the supporting structure of the fuel hose. This figure shows a state where a cover shown in FIG. 4 is removed from the fuel tank.
FIG. 6 is a side view of the fuel tank and the storing box, illustrating the supporting structure of the fuel hose. This figure shows a state where the cover of the fuel tank shown in FIG. 4 is removed.
FIG. 7 is a side view of the fuel tank and the storing box, illustrating the supporting structure of the fuel hose.
FIG. 8 is a perspective view illustrating a main part of the storing box.
FIG. 9 is a plan view illustrating the main part of the storing box. This figure shows a state where an annular member is removed from the clamp of the storing box.
FIG. 10 is a perspective view of a vehicle body cover of the motorcycle. This figure does not show a front lower side cover shown in FIG. 1.
FIG. 11 is a perspective view illustrating the supporting structure of the fuel hose in the front area of the motorcycle.
FIG. 12 illustrates an enlarged main part shown in FIG. 11.

### DETAILED DESCRIPTION OF A PREFERRED EMBODIMENT

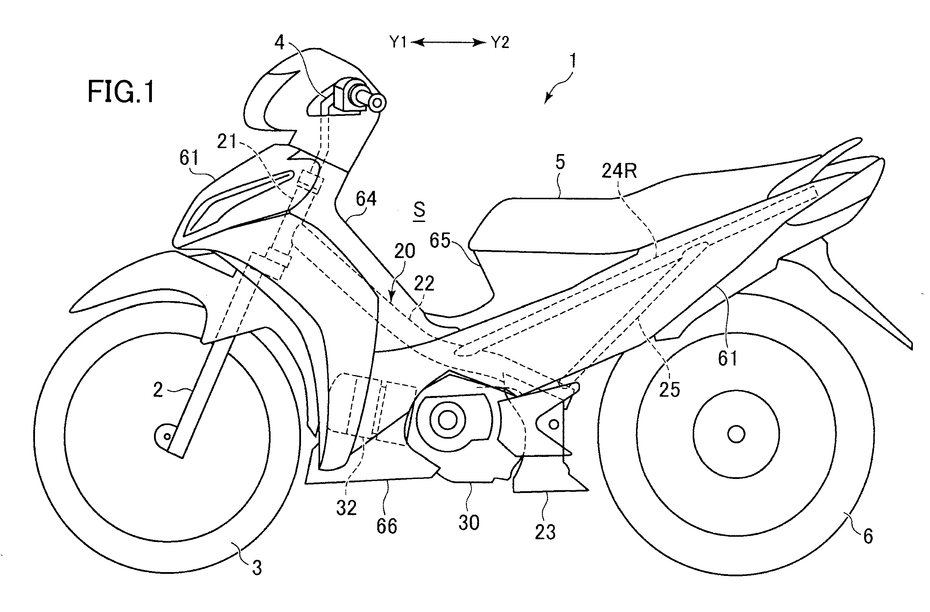

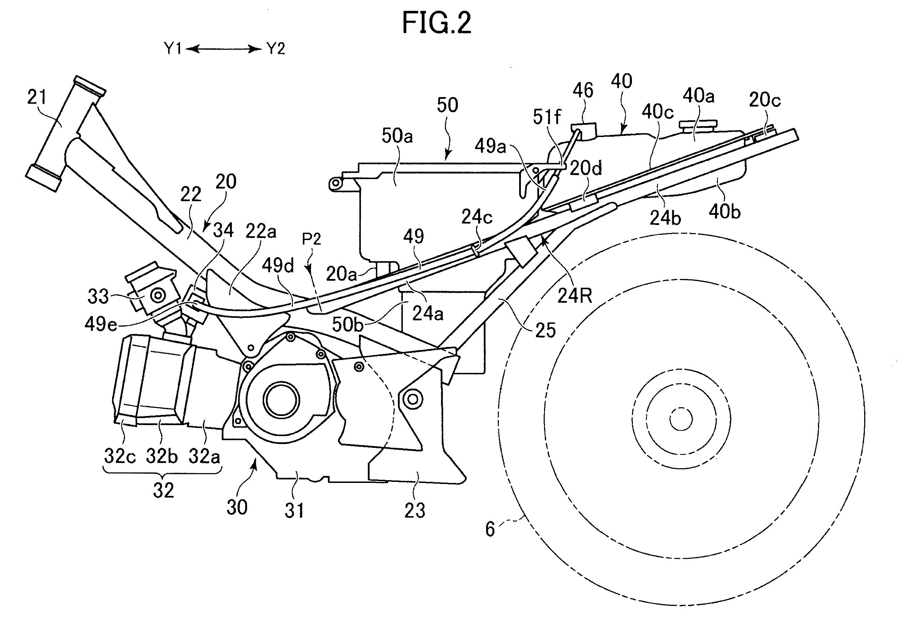

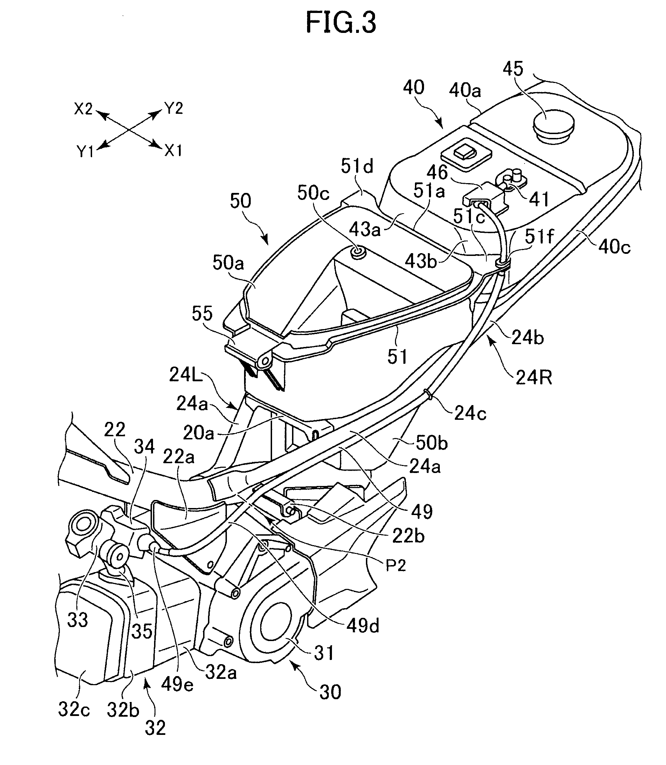

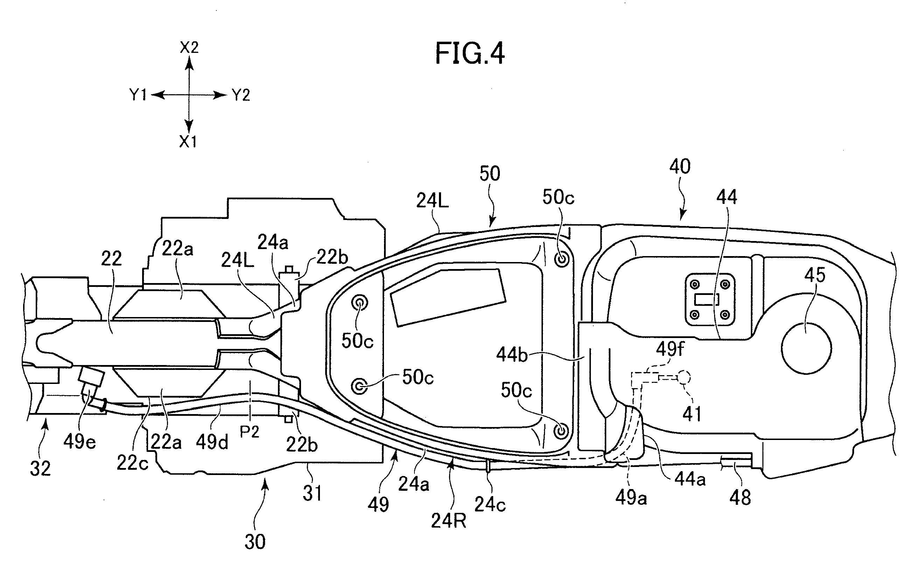

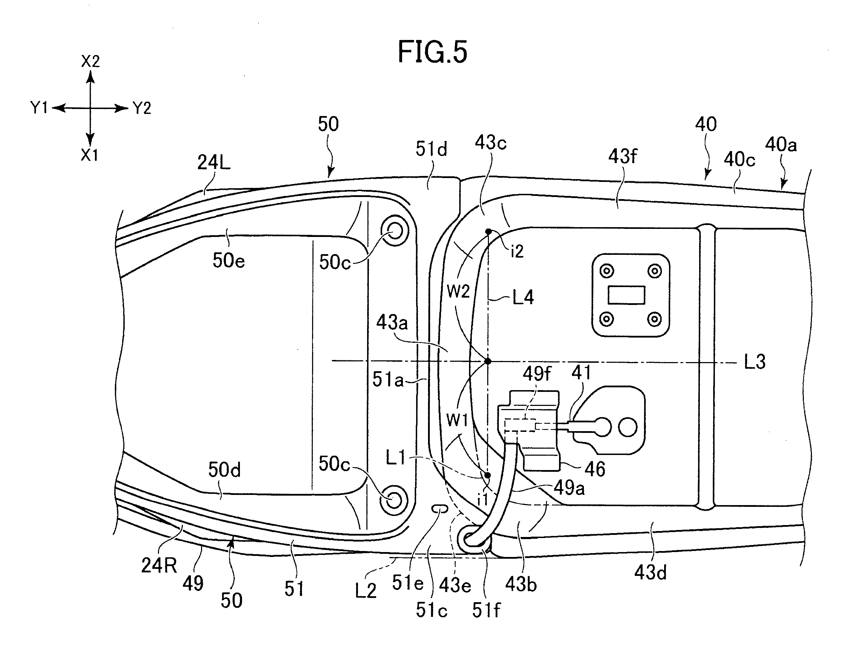

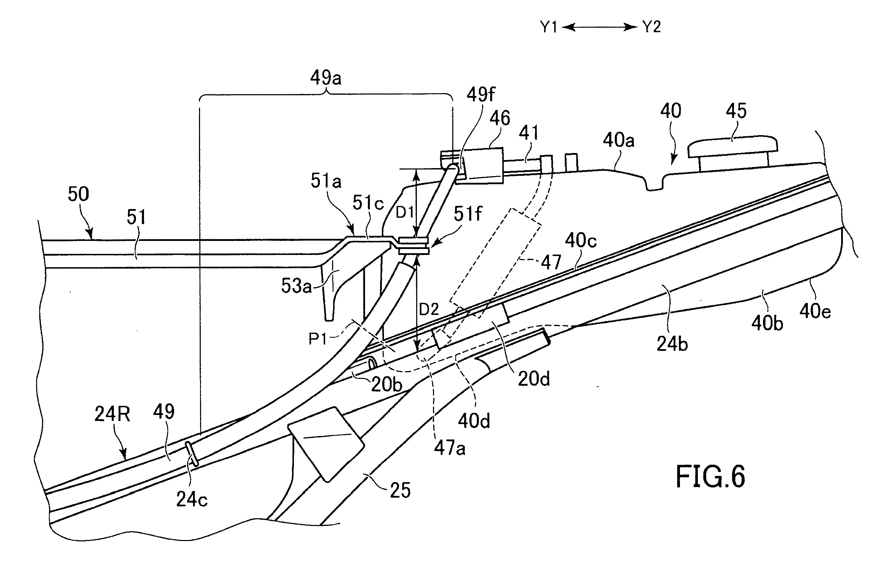

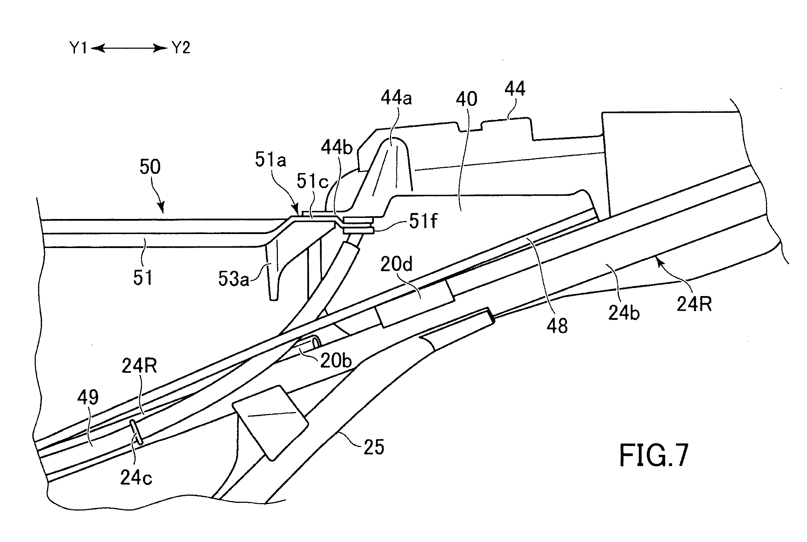

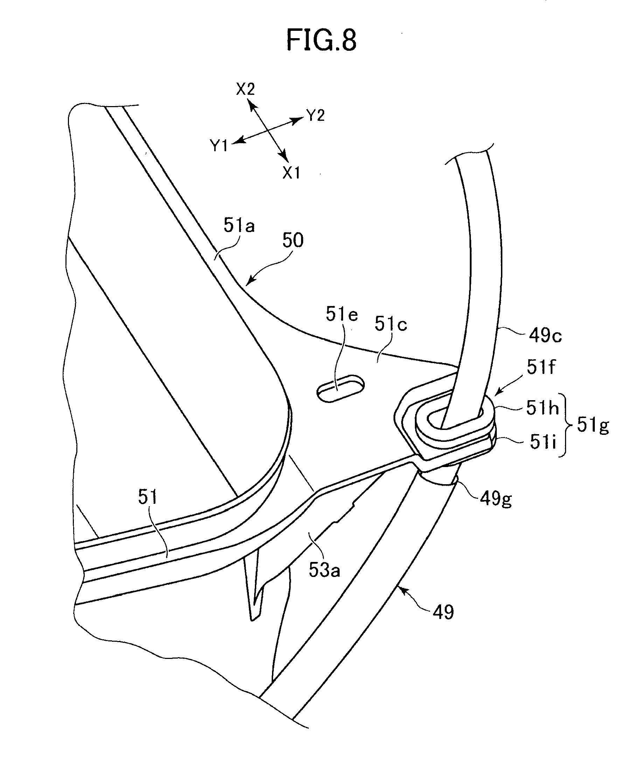

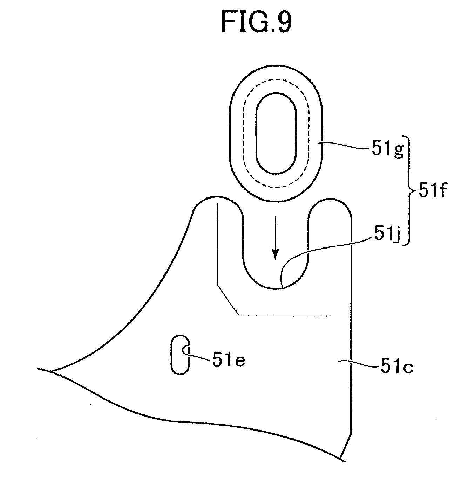

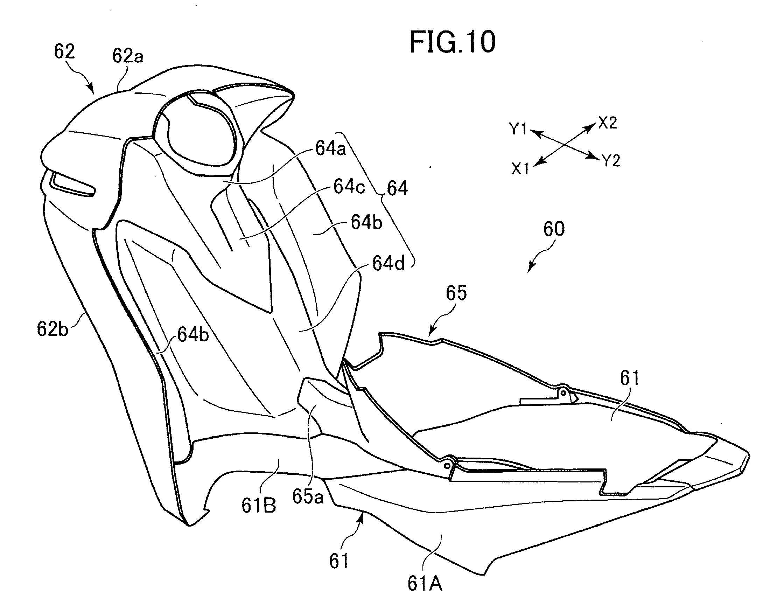

Hereinafter, an embodiment will be described with reference to the drawings. FIG. 1 is a side view of a motorcycle 1 according to this embodiment. FIG. 2 is a side view illustrating a supporting structure of a fuel hose 49 included in the motorcycle 1. FIG. 3 is a perspective view illustrating the supporting structure of the fuel hose 49. FIG. 4 is a plan view illustrating the supporting structure of the fuel hose 49. FIG. 5 is a plan view of a fuel tank 40 and a storing box 50, illustrating the supporting structure of the fuel hose 49. FIGS. 6 and 7 are side views of the fuel tank 40 and the storing box 50, illustrating the supporting structure of the fuel hose 49. FIGS. 5 and 6 illustrate a state where a cover 44 shown in FIG. 4 is removed from the fuel tank 40. FIG. 8 is a perspective view illustrating the main part of the storing box 50. FIG. 9 is a plan view illustrating the main part of the storing box 50. FIG. 9 shows a state where an annular member 51g is removed from a clamp 51f of the storing box 50. FIG. 10 is a perspective view illustrating a vehicle body cover 60 of the motorcycle 1. In the respective figures, a direction Y1 corresponds to the front direction of the vehicle body, and a direction Y2 corresponds to the rear direction of the vehicle body. A direction X1-X2 indicates the vehicle width direction, wherein the X1 direction and the X2 direction correspond to the left direction and the right direction(according to a view in forward direction Y1), respectively. In the following description, an outward direction in the vehicle width direction corresponds to a direction away from the center in the vehicle width direction, while an inward direction in the vehicle width direction corresponds to a direction toward the center in the vehicle width direction.

As illustrated in FIG. 1, a head pipe 21 is provided at the front end of a vehicle body frame 20. A steering shaft is inserted into the head pipe 21. The steering shaft is rotatably supported. The lower end of the steering shaft is connected with a front fork 2. A front wheel 3 is supported at the lower end of the front fork 2. The upper end of the steering shaft is connected with a steering 4.

As illustrated in FIG. 2, the vehicle body frame 20 includes one front frame 22. The front frame 22 extends diagonally downward and rearward from the head pipe 21, and constitutes the front portion of the vehicle body frame 20. The front frame 22 in this example is disposed at the center in the vehicle width direction. The position of the front frame 22 is not limited to this position but may be disposed in such a condition that a part of the front frame 22 (such as the rear part) is slightly bended for avoiding interference with other components.

A seat 5 is located rearward from the steering 4. A tandem seat is employed as the seat 5. The rear part of the seat 5 on which a passenger behind a rider (driver) sits is positioned higher than the front part of the seat 5 on which the rider sits. As will be described later, the fuel tank 40 is provided below the rear part of the seat 5. The fuel hose 49 connected with the fuel tank 40 is attached to the clamp 51f of the storing box 50 in the vicinity of the fuel tank 40. This structure effectively avoids interference between the fuel hose 49 and the lower surface of the seat 5. The motorcycle 1 in this example is of a so-called under-bone type which produces a space S above the front frame 22 between the steering 4 and the seat 5 (see FIG. 1).

As illustrated in FIG. 2, an engine 30 is disposed below the front frame 22. The vehicle body frame 20 includes a rear bracket 23 extending downward from the rear end of the front frame 22. The rear bracket 23 is positioned behind the engine 30. The engine 30 is supported by the front frame 22 and the rear bracket 23. More specifically, the rear part of the engine 30 (more specifically, the rear part of a crank case 31) is fixed to the rear bracket 23. The front frame 22 includes an engine bracket 22a which extends downward from the middle part of the front frame 22. The front portion of the crank case 31 is fixed to the engine bracket 22a. A rear wheel 6 is located rearward from the engine 30 and the rear bracket 23. The wheel shaft of the rear wheel 6 is supported by a swing arm (not shown) extended from the rear bracket 23 toward the rear.

As illustrated in FIG. 2, the engine 30 includes the crank case 31 in the rear part thereof. The engine 30 further includes a cylinder block 32a, a cylinder head 32b, and a head cover 32c (hereinafter, these three elements are referred to as an engine front part 32) in the front part of the engine 30. The structure of the engine front part 32 is not limited to this structure but may be constructed otherwise, such as a structure which has the head cover 32c and the cylinder head 32b combined into one body. The engine front part 32 projects from the crank case 31 toward the front. The engine 30 further includes a throttle body 33 containing a valve which controls the air amount to be supplied to the engine 30, and a fuel supply unit 34 which supplies fuel to the engine 30. The fuel supply unit 34 is joined to an air intake pipe 35 connecting the throttle body 33 and the cylinder head 32b. The fuel supply unit 34 in this example employs an injector which injects fuel into the air intake pipe 35. The fuel supply unit 34 may be attached to either the engine front part 32 (more specifically, the cylinder head 32b), or the throttle body 33.

As illustrated in FIG. 2, the fuel supply unit 34 in this example is located downward from the front frame 22. More specifically, the fuel supply unit 34 is located immediately below the front frame 22 in such a position as to become invisible behind the front frame 22 in the plan view. The throttle body 33 is also located downward from the front frame 22. The fuel supply unit 34 is disposed at the back of the throttle body 33. The engine front part 32 is spaced downward apart from the front frame 22, with the fuel supply unit 34 and the throttle body 33 positioned between the engine front part 32 and the front frame 22. The position of the fuel supply unit 34 is not limited to this position but may be disposed otherwise, such as a position offset toward the outside in the vehicle width direction with respect to the front frame 22 in the plan view. Alternatively, the fuel supply unit 34 may be obliquely fixed to the engine 30 to overlap with the front frame 22 in the side view. The fuel supply unit 34 may be fixed to the right part or the left part of the engine front part 32 either directly or indirectly (i.e., via the air intake pipe 35).

As will be described in detail later, the front end of the fuel hose 49 (more specifically, a connector 49e) is connected with the fuel supply unit 34. As illustrated in FIG. 2, the fuel supply unit 34 projects upward from the engine front part 32 (more specifically, the cylinder head 32b), and the fuel hose 49 connects with the outer circumferential surface of the fuel supply unit 34. The outer circumferential surface in this context refers to a surface which surrounds the center line of the fuel supply unit 34 (such as the center line of the injector) extending along the direction of connection between the fuel supply unit 34 and the engine 30. In this example, the fuel hose 49 connects with the side surface of the fuel supply unit 34. The side surface of the fuel supply unit 34 is disposed on the same side as the location of the fuel hose 49 with respect to the center in the vehicle width direction. According to this example, the fuel hose 49 is located on the left side with respect to the center in the vehicle width direction (and according to a view in forward direction Y1), and the fuel hose 49 is connected with the left side surface of the fuel supply unit 34. This structure facilitates the layout of the fuel hose 49. The fuel supply unit 34 has a smaller length in the vehicle width direction than the corresponding length of the throttle body 33. This arrangement of the small fuel supply unit 34 at a position behind the throttle body 33 facilitates connection between the fuel hose 49 and the fuel supply unit 34.

The vehicle body frame 20 includes a pair of (left and right) rear frames 24R and 24L (see FIG. 3). Both the front ends of the rear frames 24R and 24L connect with the rear part of the front frame 22. As illustrated in FIG. 2, the connection position between the front frame 22 and the rear frames 24R and 24L is located upward from the crank case 31. The rear frames 24R and 24L extend diagonally upward and rearward from the front ends thereof to constitute the rear part of the vehicle body frame 20. The rear frames 24R and 24L in this example linearly extend in the side view of the vehicle body frame 20.

As illustrated in FIG. 3, an inclined portion 24a is provided at each front part of the rear frames 24R and 24L. Similarly, a rear extending portion 24b is provided at each rear part of the rear frames 24R and 24L. Each of the inclined portions 24a extends diagonally upward toward the rear from the front end thereof connected to the front frame 22, and extends toward the outside in the vehicle width direction. The distance between the left and right inclined portions 24a gradually increases toward the rear. Thus, the rear frames 24R and 24L are positioned away from each other in the vehicle width direction. The rear extending portions 24b are bent with respect to the inclined portions 24a and then extend toward the rear. The rear extending portions 24b extend in the front-rear direction of the vehicle body in the plan view. As illustrated in FIG. 2, the vehicle body frame 20 further includes stays 25 which extend from the rear end of the front frame 22 to the middle portions of the rear frames 24R and 24L, and support the rear extending portions 24b.

The motorcycle 1 includes the storing box 50 and the fuel tank 40 disposed below the seat 5 (see FIGS. 1 and 2). The storing box 50 is opened upward and accommodates various articles used by the rider or the passenger, and electric components such as a battery. The fuel tank 40 is located on the rear side of the storing box 50. The fuel tank 40 is positioned adjacent to the storing box 50 with no component interposed between the fuel tank 40 and the storing box 50.

As illustrated in FIG. 2, the rear frames 24R and 24L are located lower than the upper edge of the storing box 50 and the upper surface of the fuel tank 40 to support these components 50 and 40. According to this example, the storing box 50 and the fuel tank 40 are located between the left and right rear frames 24R and 24L. The vehicle body frame 20 includes a cross bar 20a extending between the front parts of the rear frames 24R and 24L (inclined portions 24a in this example) (see FIG. 3). The front part of the storing box 50 is supported by the cross bar 20a. The vehicle body frame 20 further includes a cross bar 20b extending between the rear frames 24R and 24L (see FIG. 6). The rear part of the storing box 50 is supported by the cross bar 20b. FIG. 4 shows four attachment portions 50c for fixing the storing box 50 to the cross bars 20a and 20b.

As illustrated in FIG. 2, the rear frames 24R and 24L extend along the side surfaces of the middle portions of the storing box 50 in the up-down direction. In other words, the storing box 50 is so disposed as to have an upper part 50a located higher than the rear frames 24R and 24L, and a lower part 50b located lower than the rear frames 24R and 24L. This structure increases the volume of the storing box 50. The widths of the lower part 50b in the front-rear direction and in the vehicle width direction are smaller than those of the upper part 50a. The lower part 50b accommodates electric components such as a battery, for example. The foremost portion of the upper part 50a is supported by the cross bar 20a, while the rearmost portion of the upper part 50a is supported by the cross bar 20b.

The width of the upper part 50a in the vehicle width direction is longer than the distance between the left and right rear frames 24R and 24L. Thus, a leftmost portion 50d and a rightmost portion 50e of the upper part 50a are positioned over the rear frame portions 24R and 24L (see FIG. 5). That is, the leftmost portion 50d and the rightmost portion 50e overlap with the rear frames 24R and 24L in the plan view. The layout where the rear frames 24R and 24L is located downward from the upper edge of the storing box 50 can increase the height of the upper part 50a of the storing box 50 in the up-down direction, and thereby raises the volume of the upper part 50a. Even when the positions of the rear frames 24R and 24L are lowered in order to increase the volume of the upper part 50a of the storing box 50, the position change of the fuel hose 49 between a fuel discharge portion 41 (described later) of the fuel tank 40 and the rear frames 24R and 24L is prevented by the function of the clamp 51f provided on the storing box 50 as will be described later.

As noted above, the fuel tank 40 is disposed on the rear side of the storing box 50. The fuel tank 40 is supported by the rear extending portions 24b of the rear frames 24R and 24L. According to this example, a cross bar 20c extends between the rearmost parts of the two rear extending portions 24b as illustrated in FIG. 2. The fuel tank 40 includes a flange 40c surrounding the fuel tank 40 in the plan view. The rear part of the flange 40c is fixed to the cross bar 20c. The right and left parts of the flange 40c are fixed to brackets 20d provided on both of the two rear extending portions 24b. The fuel tank 40 includes a bowl-shaped upper tank portion 40a opening downward, and a bowl-shaped lower tank portion 40b opening upward. The outer circumferential edge of the upper tank portion 40a and the outer circumferential edge of the lower tank portion 40b are joined to each other to constitute the flange 40c.

The upper surface of the fuel tank 40 is positioned higher than the upper edge of the storing box 50 (see FIG. 2). As illustrated in FIG. 3, the fuel tank 40 includes the fuel discharge portion 41 on the upper surface of the fuel tank 40. The fuel tank 40 contains a fuel pump 47 in the inside thereof (see FIG. 6) so that fuel sucked by the fuel pump 47 can be discharged through the fuel discharge portion 41. The position of the fuel pump is not limited to this position. For example, the function of the fuel pump may be performed by the fuel supply unit 34, in which case fuel within the fuel tank 40 is supplied to the fuel supply unit 34 by the function of the fuel supply unit 34. The fuel hose 49 connects the fuel discharge portion 41 and the fuel supply unit 34 of the engine 30. As illustrated in FIG. 2, the fuel supply unit 34 is located further forward and lower than the fuel discharge portion 41. More specifically, the fuel supply unit 34 is located further forward than the rearmost part (rear flange 51a described later) of the upper edge of the storing box 50 and lower than a clamp 24c of the rear frame 24R. According to this example, the fuel supply unit 34 is positioned below the front frame 22 as discussed above. Thus, the fuel hose 49 extends downward toward the front in the side view. As illustrated in FIG. 4, a connector 49f is provided at the rear end of the fuel hose 49 as a junction between the fuel hose 49 and the fuel discharge portion 41. Similarly, the connector 49e is provided at the front end of the fuel hose 49 as a junction between the fuel hose 49 and the fuel supply unit 34. The fuel hose 49 is made of flexible material such as rubber.

As illustrated in FIG. 6, the rear frames 24R and 24L (more specifically, the rear extending portions 24b) are disposed lower than the upper surface of the fuel tank 40. The fuel hose 49 includes a portion extending from the fuel discharge portion 41 toward one of the two rear frames 24R and 24L (left rear frame 24R in this example). This portion is hereinafter referred to as a hose rear portion 49a. The hose rear portion 49a bends downward from the fuel discharge portion 41 while extending toward the outside in the vehicle width direction to reach the (left) rear frame 24R (see FIG. 5). As can be seen from FIG. 5, the connector 49f of the fuel hose 49 has an L shape so that the fuel hose 49 connected with the fuel discharge portion 41 via the connector 49f can extend to the left (direction X1) in the plan view. A protection plate 46 covering the connector 49f is fixed to the upper surface of the fuel tank 40.

As illustrated in FIG. 6, the upper edge of the storing box 50 is spaced upward apart from the rear frame 24R. As noted above, the upper surface of the fuel tank 40 on which the fuel discharge portion 41 is provided is located higher than the upper edge of the storing box 50. The storing box 50 includes the clamp 51f. According to this example, the clamp 51f is provided to the upper edge of the storing box 50. The clamp 51f is positioned lower than the upper surface of the fuel tank 40, spaced upward apart from the rear frame 24R and clamps the hose rear portion 49a. That is, the clamp 51f restricts position change of the hose rear portion 49a. As illustrated in FIG. 9, the clamp 51f in this example has a recess 51j formed at the upper edge of the storing box 50, and an annular member 51g accepted in the recess 51j and fixed thereto. The hose rear portion 49a is inserted through the inside of the annular member 51g. This structure prevents separation of the hose rear portion 49a from the upper edge of the storing box 50. According to this structure, the portion (that is the rear portion 49a) of the fuel hose 49 which is spaced upward from from the rear frame 24R is clamped, and thereby shift of the fuel hose 49 in the vicinity of the fuel discharge portion 41 is avoided even when the fuel hose 49 is made of material having relatively low rigidity such as rubber. Moreover, in a structure which does not include the clamp 51f and therefore allows easy position change of the fuel hose 49, a relatively large space is required around the hose rear portion 49a so as to avoid interference between the fuel hose 49 and the components around the fuel hose 49. However, the clamp 51f provided on the storing box 50 in this embodiment can eliminate the necessity for preparing such a large space. Moreover, the distance between the fuel discharge portion 41 and the clamp 51f disposed at the upper edge of the storing box 50 is short in the up-down direction in this embodiment. This arrangement further securely prevents interference between the fuel hose 49 and the components positioned close the fuel hose 49 (such as the lower surface of the seat 5 and side cover 61 of the vehicle body cover 60 described later).

As illustrated in FIG. 6, the clamp 51f is located laterally (to the left in this example) from the fuel tank 40. Thus, the clamp 51f overlaps with the fuel tank 40 in the side view. This arrangement decreases the distance between the fuel discharge portion 41 and the clamp 51f in the front-rear direction, thereby preventing a sharp bend of the fuel hose 49 (hose rear portion 49a). Moreover, this arrangement that the clamp 51f is located laterally from the fuel tank 40 can avoid decrease in the volume of the storing box 50, and decrease in the volume of the fuel tank 40. Furthermore, this arrangement of the clamp 51f eliminates the necessity for considerable change in the external shape and position of the fuel tank 40. As illustrated in FIG. 5, a flange 51 is provided at the upper edge of the storing box 50. The flange 51 includes the rear flange 51a spreading toward the rear. The rear flange 51a includes projections 51c and 51d disposed at the leftmost part and the rightmost part of the rear flange 51 a, respectively, and extending toward the rear longer than the portion of the rear flange 51a formed between the projections 51c and 51d. The clamp 51f is provided on one of the projections 51c and 51d (left projection 51c in this example). The arrangement that the clamp 51f on the projection 51c is located at the leftmost part of the rear flange 51a further effectively prevents decrease in the volume of the fuel tank 40. According to this example, the clamp 51f is provided at the rear end of the projection 51c. This arrangement further decreases the distance between the fuel discharge portion 41 and the clamp 51f in the front-rear direction.

As illustrated in FIG. 5, the upper tank portion 40a of the fuel tank 40 includes a front wall 43a which forms the wall on the front side of the upper tank portion 40a. The upper tank portion 40a further includes a first corner wall 43b and a second corner wall 43c which form corner walls of the front side and are located on the opposite sides with respect to the center in the vehicle width direction. According to this example, the first corner wall 43b is positioned on the left side from the center in the vehicle width direction, whereas the second corner wall 43c is positioned on the right side from the center in the vehicle width direction. The front wall 43a is located between the first corner wall 43b and the second corner wall 43c and constitutes the foremost part of the upper tank portion 40a. The first corner wall 43b forms a wall between the front wall 43a and a first side wall 43d (left side wall in this example) located on the same side as the first corner wall 43b from the center in the vehicle width direction. The second corner wall 43c forms a wall between the front wall 43a and a second side wall 43f (right side wall in this example) located on the side opposite to the first side wall 43d. The rear edge of the rear flange 51 a of the storing box 50 is curved along the front wall 43a, the first corner wall 43b and the second corner wall 43c so that a sufficient volume of the fuel tank 40 can be secured.

As illustrated in FIG. 5, the hose rear portion 49a extends through a location positioned forward and laterally from the first corner wall 43b. In this example, the hose rear portion 49a extends along the first corner wall 43b. Alternately, the hose rear portion 49a may not be required to extend along the first corner wall 43b. For example, when only a part of the hose rear portion 49a is located forward and laterally from the first corner wall 43b, the extension direction of this part may not extend along the first corner wall 43b. For example, the part of the hose rear portion 49a may extend with larger inclination than that of the first corner wall 43b, or may extend in the front-rear direction through the location positioned forward and laterally from the first corner 43b.

The shapes of the first corner wall 43b and the second corner wall 43c are not symmetric with respect to the center in the vehicle width direction, but are disposed such that the first corner wall 43b is largely shifted inwardly in the vehicle width direction in comparison with the second corner wall 43c. In other words, the first corner wall 43b is located further inwardly than an imaginary wall which is symmetry with the second corner wall 43c with respect to a line L3 passing through the center of the fuel tank 40 in the vehicle width direction. A long and two short dashes line L1 in FIG. 5 indicates the upper edge of this imaginary wall portion. Specifically, the first corner wall 43b is offset toward the rear and the center in the vehicle width direction from the imaginary wall portion which is symmetry with the second corner wall 43c with respect to the line L3. In other words, a cross point i1 defined by a line L4 extending in the vehicle width direction and the first corner wall 43b has a smaller distance from the center line L3 of the fuel tank 40 than a cross point i2 defined by the line L4 and the second corner wall 43c. In FIG. 5, a distance W1 indicates the distance between the cross point i1 and the center line L3, while a distance W2 indicates the distance between the cross point i2 and the center line L3. The distance W1 is smaller than the distance W2. As noted above, the hose rear portion 49a extends through the location positioned forward and laterally from the first corner wall 43b. The clamp 51f of the storing box 50 is located laterally from the first corner wall 43b. According to this arrangement of the first corner wall 43b, the hose rear portion 49a, and the clamp 51f, expansion of the clamp 51f and the projection 51c toward the outside in the vehicle width direction can be decreased, wherefore increase of the vehicle width can be prevented. Accordingly, the rider and the passenger sitting behind the rider can easily straddle (sit) on the seat 5. Moreover, according to the position of the clamp 51f, the fuel tank 40 can have a sufficient width in its portion located further rearward than the the first corner wall 43b, thereby easily producing a sufficient volume of the fuel tank 40.

As illustrated in FIG. 5, the clamp 51f and the projection 51c are not positioned beyond the position of the left and right edges of the fuel tank 40 toward the outside in the vehicle width direction. In other words, the clamp 51f and the projection 51c are not positioned beyond a line L2 passing through the left edge of the fuel tank 40 toward the outside in the vehicle width direction. The vehicle body cover 60 of the motorcycle 1 includes the side cover 61. The side cover 61 is positioned along the rear frame 24R, and covers the outer surface (left side in this example) of the rear frame 24R in the vehicle width direction (see FIG. 9). The layout that the clamp 51f and the projection 51c are not positioned beyond the line L2 prevents their interferes with the side cover 61. The positions of the edge of the projection 51c (left edge in this example) and the clamp 51f are not limited to the positions specified in this example but may be located beyond the line L2 toward the outside in the vehicle width direction. In this case, a sufficient volume of the fuel tank 40 can be easily secured. Alternatively, the edge of the projection 51c and the clamp 51f may be located further inwardly than the line L2 in the vehicle width direction.

As noted above, the upper tank portion 40a of the fuel tank 40 has a bowl shape which opens to below. The circumferential walls of the upper tank portion 40a (walls 43a, 43b, 43d, 43c, and other not-shown rear walls) are inclined such that the upper edges of these walls is located inwardly than the lower edges thereof. As noted above, the clamp 51f of the storing box 50 is located laterally from the upper tank portion 40a (more specifically, from the first corner wall 43b). According to this layout of the clamp 51f, the clamp 51f can be located in the space produced by the inclination of the first corner wall 43b, i.e., the space formed on the front and lateral side of the first corner wall 43b. Thus, the clamp 51f can be equipped without greatly decreasing the volume of the fuel tank 40.

The first corner wall 43b is inclined more greatly than the second corner wall 43c. In this embodiment, the upper edge of the first corner wall 43b is located more inwardly than the upper edge of the imaginary wall portion forming symmetry with the second corner wall 43c with respect to the center in the vehicle width direction (chain double-dashed line L1 in FIG. 5) as illustrated in FIG. 5. A lower edge 43e of the first corner wall 43b is located below the projection 51c. According to this structure, a sufficient volume of the fuel tank 40 can be more securely produced than a structure which recesses the first corner wall 43b more greatly than the second corner wall 43c without inclination of the first corner wall 43b.

As illustrated in FIGS. 5 and 6, the clamp 51f and the projection 51c of the storing box 50 are located upward from the rear frame 24R. In other word, the clamp 51f overlaps with the rear extending portion 24b in the plan view. According to this structure, the projection 51c and the clamp 51f does not affect the volume of the fuel tank 40, nor increase the width of the vehicle. Further, the side cover 61 covering the left side of the rear frame 24R can be easily attached to the vehicle body frame 20 (more specifically, to the rear frame 24R and the stay 25). As noted above, the clamp 51f and the projection 51c of the storing box 50 may be positioned further outwardly (that is, further leftward) than the rear frame 24R in the vehicle width direction. In this case, a sufficient volume of the fuel tank 40 can be further easily produced.

As illustrated in FIG. 3, the rear frame 24R includes the clamp 24c. The clamp 24c is located at the foremost part of the rear extending portion 24b. The fuel hose 49 is attached to the rear fame 24R via the clamp 24c. Thus, the clamp 24c restricts position change of the fuel hose 49. The clamp 24c is an annular member having an opened part, through the inside of which the fuel hose 49 is inserted. This structure restricts movement of the middle part of the fuel hose 49. As noted above, the fuel supply unit 34 of the engine 30 is located downward from the front frame 22, and the fuel hose 49 connects the fuel supply unit 34 and the fuel discharge portion 41 of the fuel tank 40. Thus, the fuel hose 49 passes through the clamp 51f in the downward direction, and extends toward the front. The fuel supply unit 34 is located further forward than the clamp 24c of the rear frame 24R. Thus, the fuel hose 49 includes a part extending along the rear frame 24R. The position of the clamp 24c of the rear frame 24R is not limited to this position, but may be located on the inclined portion 24a, for example. Alternatively, the clamp 24c may be disposed further rearward than the foremost part of the rear frame 24R.

As noted above, the storing box 50 is disposed between the left and right rear frames 24R and 24L. The rear frame 24R is arranged along the side surface of the middle part of the storing box 50 in the up-down direction. As illustrated in FIG. 4, the clamp 24c of the rear frame 24R is provided to a surface (left surface in this example) of the rear frame 24R located outwardly in the vehicle width direction. Accordingly, the portion of the fuel hose 49 extending along the rear frame 24R is located outside the rear frame 24R in the vehicle width direction. This structure increases the volume of the storing box 50.

As illustrated in FIG. 6, the clamp 51f of the storing box 50 is located closer to the rear end of the fuel hose 49 connected with the fuel discharge portion 41 (connector 49f) than an intermediate position P1 between the clamp 24c of the rear frame 24R and the rear end of the fuel hose 49. That is, the position of the fuel hose 49 held by the clamp 51f is located closer to the rear end of the fuel hose 49 than the intermediate position between the position held by the clamp 24c and the end of the fuel hose 49. According to this structure, movement of the fuel hose 49 in the vicinity of the fuel discharge portion 41 can be effectively prevented even when the clamp 24c is located far away from the fuel discharge portion 41.

As noted above, the fuel tank 40 includes the lower tank portion 40b. As illustrated in FIG. 6, the rear part of the lower tank portion 40b is located lower than the rear frames 24R and 24L in the side view. This structure can reduce the distance between the fuel discharge portion 41 and the clamp 51f in the up-down direction while securing a sufficient volume of the fuel tank 40. As illustrated in FIG. 5, the fuel discharge portion 41 is located in the front area of the upper surface of the fuel tank 40. This position of the fuel discharge portion 41 can facilitate the arrangement of the fuel hose 49, and prevent decrease in the volume of the fuel tank 40 in comparison with a structure which positions the fuel discharge portion 41 in the rear area of the upper surface of the fuel tank 40. More specifically, in the structure which disposes the fuel discharge portion 41 in the rear area of the upper surface of the fuel tank 40, an additional bending portion needs to be provided in the fuel hose 49, or a partial recess of the fuel tank 40 is required to prevent interference between the fuel hose 49 and the fuel tank 40. According to the structure in this embodiment which disposes the fuel discharge portion 41 in the front area of the upper surface of the fuel tank 40, the necessity for the additional bending of the fuel hose 49 or reduction of the volume of the fuel tank 40 is eliminated. Moreover, the fuel discharge portion 41 on the upper surface of the fuel tank 40 is offset toward the rear frame 24R from the center in the vehicle width direction. According to this structure, the distance between the fuel discharge portion 41 and the clamp 51f can be further reduced. As illustrated in FIG. 6, the lower surface of the front part of the fuel tank 40 (lower surface 40d of the front part of the lower tank portion 40b) is located lower than the lower surface of the rear part of the fuel tank 40 (lower surface 40e of the rear part of the lower tank portion 40b). Thus, fuel gathers in the front part of the fuel tank 40 when the amount of the fuel decreases. As noted above, the upper end of the fuel pump 47 is connected with the fuel discharge portion 41. Since the fuel discharge portion 41 is disposed in the front part of the upper surface of the fuel tank 40, the fuel pump 47 can be easily positioned in the front part of the inside of the fuel tank 40. Therefore, a lower end 47a of the fuel pump 47 (fuel suction part such as a strainer) can be easily positioned in the front part of the fuel tank 40 (i.e., the area where fuel gathers).

As illustrated in FIG. 6, a distance D1 between the clamp 51f and the horizontal plane where the fuel discharge portion 41 is disposed is shorter than a distance D2 between the clamp 51f and the rear frame 24R in the up-down direction. This structure decreases the distance between the fuel discharge portion 41 and the clamp 51f, and effectively reduces movement of the fuel hose 49 in the vicinity of the fuel discharge portion 41.

As discussed above, the seat 5 is disposed above the storing box 50 and the fuel tank 40. The seat 5 is supported by a foremost part 55 of the upper edge of the storing box 50 such that the storing box 50 is openable and closable (see FIG. 3). The lower surface of the seat 5 includes a supported portion which projects from the lower surface thereof toward the projections 51c and 51d of the rear flange 51a of the storing box 50. The seat 5 in its closed condition is supported by the projections 51 c and 51 d. As noted above, the clamp 51f f is equipped on the projection 51c. That is, the fuel hose 49 is clamped by using the portion supporting the seat 5.

As illustrated in FIG.6, the outside surface of the storing box 50 has a rib 53a formed thereon and projected toward the rear. The rib 53a is positioned below the projection 51c to support the projection 51c. This structure increases the strength of the projection 51c. The fuel hose 49 passes downward through the clamp 51f, and extends downward on the lower side of the projection 51c. The enhanced strength of the projection 51c can prevent a load from being applied to the portion of the fuel hose 49 located below the projection 51 c, thereby preventing a load from being applied to the junction (connector 49f) between the fuel hose 49 and the fuel discharge portion 41.

As illustrated in FIGS. 4 and 7, the upper surface of the fuel tank 40 is covered by the cover 44. The cover 44 is so provided as to cover the fuel discharge portion 41, the junction between the fuel hose 49 and the fuel discharge portion 41, the portion of the fuel hose 49 between the fuel discharge portion 41 and the clamp 51f, and the clamp 51f. According to this structure, the fuel discharge portion 41 and the portion of the fuel hose 49 between the fuel discharge portion 41 and the clamp 51f are not exposed when the fuel tank 40 is viewed in the plan view. Thus, contact between the fingers of an operator and the fuel hose 49 can be avoided. The cover 44 includes an bulging portion 44a which extends along the fuel hose 49. An opening is formed in the rear part of the cover 44, and a feed oil port 45 formed in the rear part of the upper surface of the fuel tank 40 is exposed through the opening. A drain hose 48 is connected to the rear part of the cover 44. A saucer (not shown) is provided within the cover 44 to guide fuel leaked from the feed oil port 45 toward the drain hose 48. The drain hose 48 extends (on the left side) toward the front along the rear frame 24R.

The front part of the cover 44 is formed along the front wall 43a and the first corner wall 43b of the upper tank portion 40a of the fuel tank 40. As illustrated in FIG. 7, the lower edge of the front part of the cover 44 reaches the rear flange 51 a of the storing box 50. A front flange 44b is formed at the lower edge of the cover 44 and attached to the projection 51 c of the rear flange 51a. According to this example, the projection 51c has an attachment hole 51e (see FIG. 8) into which a projection (not illustrated) formed on the lower surface of the front flange 44b is inserted. This structure prevents position change of the front part of the cover 44 with respect to the clamp 51f, thereby avoiding a load produced by the shift of the cover 44 and applied to the fuel hose 49.

As discussed above, the fuel hose 49 is inserted through the inside of the annular member 51g included in the clamp 51f. The annular member 51g has an annular shape surrounding the entire circumference of the fuel hose 49. This structure securely restricts shift of the fuel hose 49 toward the rear. As illustrated in FIG. 9, the recess 51j opened to the rear is formed in the edge (rear edge in this example) of the projection 51 c of the rear flange 51a so that the annular member 51g can be accepted inside the recess 51j. This structure facilitates attachment of the fuel hose 49. More specifically, the fuel hose 49 can be clamped to the storing box 50 by a process that the fuel hose 49 is inserted into the annular member 51g, and then the annular member 51g is fitted into the recess 51j of the projection 51c. As illustrated in FIG. 8, the annular member 51g includes an upper annular portion 51h and a lower annular portion 51i between which the edge of the recess 51j of the projection 51c is sandwiched. The annular member 51g in this example has a shape not perfect circular but elongated circular in the front-rear direction. This configuration reduce a movement of the fuel hose 49 by the clamp 51f without applying a load to the fuel hose 49 extending obliquely. The clamp provided on the storing box 50 is not limited to the clamp 51f having this structure. For example, the recess 51j formed in the projection 51c may have a size corresponding to the outside diameter of the fuel hose 49 to function as a clamp which clamps (holds) the fuel hose 49 directly to the storing box 50.

The storing box 50 is made of plastic material having relatively high rigidity. The annular member 51g is made of rubber or other materials having lower rigidity than that of the material of the storing box 50. This structure can avoid a load applied to the fuel hose 49. The fuel hose 49 includes a main tube 49c, and a protection tube 49g provided on the outside of the main tube 49c. The protection tube 49g is provided on the majority of the fuel hose 49, but not provided at the rear end of the fuel hose 49 such that the main tube 49c is exposed at the rear end. The annular member 51g surrounds the main tube 49c. The annular member 51g is made of relatively soft material and holds the main tube 49c. The clamp 24c of the rear frame 24R is made of metal and clamps the portion of the fuel hose 49 where the protection tube 49g is provided.

As illustrated in FIG. 10, the vehicle body cover 60 includes the right side cover 61 and the left side cover 61 covering the outsides of the rear frames 24R and 24L in the vehicle width direction, respectively. The vehicle body cover 60 further includes a front cover 62, a center cover 64, and an under-seat cover 65.

As illustrated in FIGS. 1 and 10, an upper part 62a of the front cover 62 covers the front side of the head pipe 21 of the vehicle body frame 20. The front cover 62 includes right and left side parts 62b projecting downward from the lower edges of the right part and the left part of the upper part 62a. The side parts 62b cover the right and left sides of the front part of the vehicle body.

As illustrated in FIGS. 1 and 10, a uppermost part 64a of the center cover 64 covers the rear side of the head pipe 21. The center cover 64 extends downward and rearward from the uppermost part 64a along the front frame 22 to cover the upper side of the front frame 22. The left and right edges of the center cover 64 are connected with the rear edges of the side parts 62b of the front cover 62. The center cover 64 in this example includes a rear part 64d in the lower part thereof. The rear part 64d extends downward and rearward from the lower part (rear part) of the center cover 64 along the front frame 22 and curves such that the front frame 22 surrounds the front frame 22. The center cover 64 further includes a front part 64c, the uppermost part 64d, and side walls 64d. The front part 64c is located on the front side (upper side) of the rear part 64d to cover the upper part of the front frame 22. The uppermost part 64a covers the rear part of the head pipe 21. The side walls 64b are connected with the rear edges of the side parts 62b of the front cover 62. According to this example, the uppermost part 64a, the front part 64c, and the side walls 64b are formed integrally with each other, but are separable from the rear part 64d. The separable structure of the center cover 64 is not limited to this structure but may be constructed such that the rear part 64d is formed integrally with other parts.

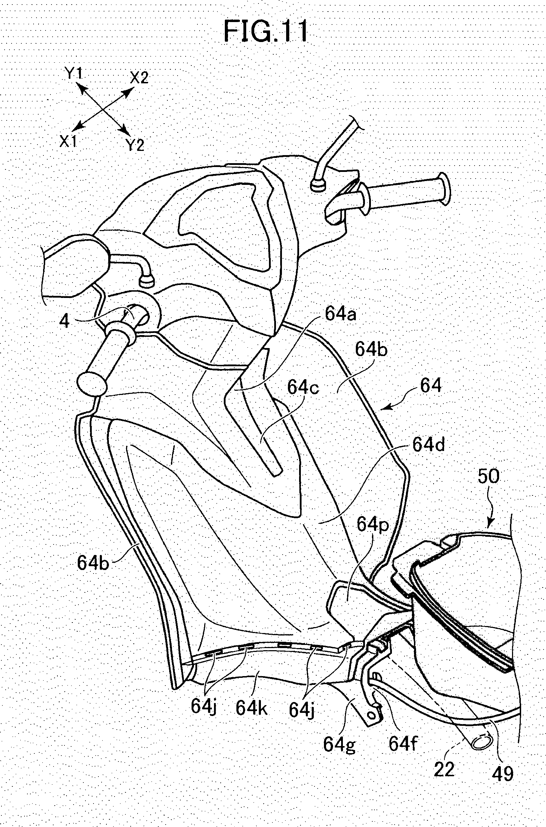

As illustrated in FIG. 10, the left side cover 61 and the right side cover 61 are located outside the rear frames 24R and 24L in the vehicle width direction. Each of the left side cover 61 and the right side cover 61 includes a rear part 61A covering the corresponding rear frame 24R or 24L, and a front part 61B extending from the rear part 61A toward the front. Each of the front parts 61 B has a curved plate shape. The front parts 61 B on the right side and left side extends forward along lowermost parts (64k in FIG. 11) of the right part and left part of the rear part 64d while gradually curved toward the outside in the vehicle width direction. As illustrated in FIG. 1, the vehicle body cover 60 includes a lower cover 66. The lower cover 66 is disposed below the front part 61 B of the side cover 61 and covers the engine front part 32. FIG. 10 does not show the lower cover 66.

As illustrated in FIG. 10, the under-seat cover 65 is disposed below the seat 5 and surrounds the storing box 50 located below the seat 5. That is, the under-seat cover 65 covers the front side and lateral sides of the storing box 50. The lower edges of the right part and the left part of the under-seat cover 65 are connected with the upper edges of the side covers 61. The under-seat cover 65 includes a front part 65a located above the front frame 22 and attached to the rear part 64d of the center cover 64.

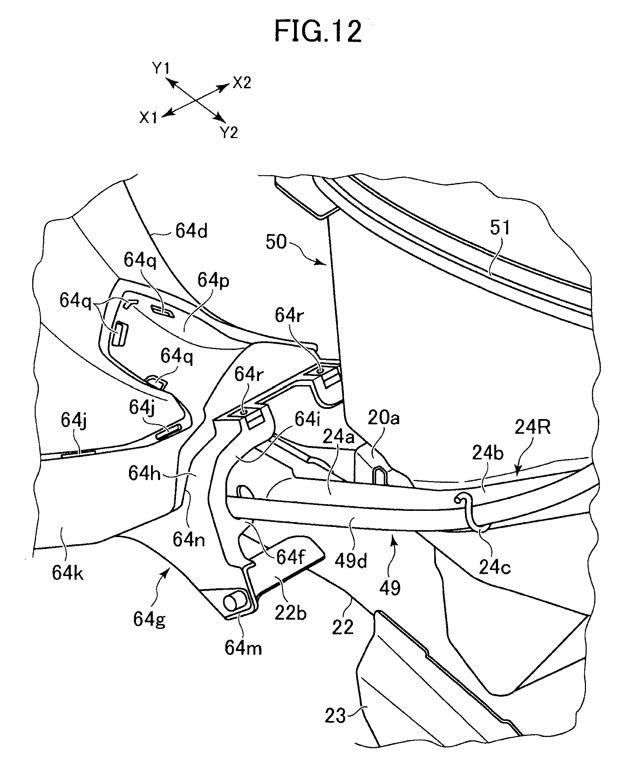

The supporting structure of the fuel hose 49 in the front area of the motorcycle 1 is now explained. FIG. 11 is a perspective view illustrating the supporting structure of the fuel hose 49 in the front area of the motorcycle 1. FIG. 12 is an enlarged view of the main part shown in FIG. 11.

As described above, the fuel hose 49 is attached to the rear frame 24R via the clamp 24c, and includes a part extending along the rear frame 24R. As illustrated in FIG. 2, the fuel hose 49 includes a portion between the part extending along the rear frame 24R and the fuel supply unit 34 (hereinafter referred to as a hose front portion 49d). As illustrated in FIG. 11, the vehicle body cover 60 includes a clamp 64f. The clamp 64f clamps (holds) the hose front portion 49d to a position away from the front frame 22 toward the outside in the vehicle width direction. According to this structure, the bend of the fuel hose 49 becomes smaller than the bend of the fuel hose 49 which is clamped to the front frame 22 and thereby extends along the front frame 22 and the inclined portion 24a of the rear frame 24R. In other words, the extension direction of the hose front portion 49d becomes closer to the linear direction in this example than the extension direction of the fuel hose 49 extending along the front frame 22 and the inclined portion 24a of the rear frame 24R. Moreover, the clamp 64f can more securely prevent position shift of the fuel hose 49 in the vicinity of the fuel supply unit 34 than a structure which does not have the clamp 64f. Accordingly, the stability of the connection between the fuel hose 49 and the fuel supply unit 34 increases. The clamp 64f in this example has an annular shape open upward. A position P2 indicated in FIGS. 2 through 4 corresponds to a portion of the fuel hose 49 held by the clamp 64f.

As noted above, each of the rear frames 24R and 24L includes the inclined portion 24a inclined toward the outside in the vehicle width direction, and the rear extending portion 24b bent with respect to the inclined portion 24a and extending from the rear end of the inclined portion 24a toward the rear. The clamp 24c of the rear frame 24R is provided on the rear extending portion 24b. According to this layout of the clamp 24c, the hose front portion 49d passes through a position farther away from the connection position between the front frame 22 and the rear frame 24R in the vehicle width direction than in a structure which disposes the clamp 24c on the inclined portion 24a. Accordingly, the bend of the hose front portion 49d can further decrease.

As explained above, the vehicle body cover 60 includes the center cover 64 and the side covers 61 connected with each other. The center cover 64 and the side covers 61 are components molded separately from each other. That is, the center cover 64 and the side cover 61 are separable from each other. The center cover 64 includes a portion invisible behind the side covers 61, and the clamp 64f is provided to the invisible portion of the center cover 64. More specifically, the center cover 64 includes a portion (projecting portion 64g described later) covered by the side cover 61, to which the clamp 64f is provided. According to this structure, the operator who removes the vehicle body cover 60 can visually recognize the clamp 64f on the center cover 64 by removing the side cover 61. Therefore, the operator can easily remove the fuel hose 49 from the clamp 64f when removing the vehicle body cover 60 from the vehicle body. Particularly, the clamp 64f in this example is disposed at the end (rear end in this example) of the center cover 64 toward the side cover 61. Thus, the operator can recognize the clamp 64f further easily after removal of the side cover 61. The clamp 64f is not necessarily required to be positioned at the end of the center cover 64. For example, the clamp 64f may be located away from the end of the center cover 64 toward the opposite side to the side cover 61 and is invisible behind the side cover 61.

According to this example, the center cover 64 is located forward from the side cover 61, while the clamp 64f is provided to the rear end of the center cover 64. More specifically, the rear part 64d of the center cover 64 is so configured as to cover the upper side of the front frame 22 as explained above. As illustrated in FIG. 12, the projecting portion 64g projecting toward the rear is provided at the rear end of the rear part 64d of the center cover 64. The clamp 64f is formed on the projecting portion 64g. The projecting portion 64g in this example includes a first wall 64h curved to surround the front frame 22, and a second wall 64i projects inwardly from the rear edge of the first wall 64h toward the front frame 22. The curvature provides the first wall 64h with a surface facing upward, a surface facing laterally, and a surface facing diagonally upward and laterally. The first wall 64h overlap with the front part 61 B of the side cover 61. The second wall 64i is so configured that the plane containing the second wall 64i crosses the front part 61 B of the side cover 61 and the front frame 22. A recess opened upward is formed in the inside edge of the second wall 64i to function as the clamp 64f. The hose front portion 49d passes through this recess and extends toward the front. According to the structure in this example, the recess formed in the inside edge of the second wall 64i as the clamp 64f can produce high strength against a force applied from above. Moreover, the curve of the first wall 64h can increase the strength of the first wall 64h more than the corresponding strength in a structure which does not have a similar curve.

As illustrated in FIG. 12, the front frame 22 includes a bracket 22b which extends outwardly from the front frame 22 in the vehicle width direction. The projecting portion 64g on which the clamp 64f is formed is attached to the bracket 22b. The clamp 64f is positioned higher than the bracket 22b. In other words, the clamp 64f is provided in the space above the bracket 22b. The position of the clamp 64f is slightly shifted toward the front from the bracket 22b. The first wall 64h includes an attachment portion 64m located at the lower end of the right part of the first wall 64h and attached to the bracket 22b. The clamp 64f is located further inwardly in the vehicle width direction than the attachment portion 64m. According to this structure, a force toward the inside in the vehicle width direction does not act on the fuel hose 49 held by the clamp 64f. The clamp 64f is offset toward the basal end (front edge 64n) of the first wall 64h from the attachment portion 64m. Thus, even when an external force is applied to the projecting portion 64g, the clamp 64f is not displaced by this force.

As discussed above, the front parts 61 B of the side covers 61 are connected with the lowermost parts 64k of the right portion and the left portion of the center cover 64. The projecting portion 64g is covered by the front part 61B of the side cover 61 (see FIG. 10). The side covers 61 can be removed from the vehicle body in a state where the center cover 64 remains attached to the vehicle body. In other words, in the step of removing the vehicle body cover 60, the side covers 61 can be removed prior to removal of the center cover 64, but the center cover 64 cannot be removed prior to removal of the side covers 61. The operator who desires to remove the vehicle body cover 60 is required to initially remove the side covers 61 from the vehicle body, then remove the fuel hose 49 from the clamp 64f, and finally remove the center cover 64 from the vehicle body. For attachment of the vehicle cover 60, these procedures are carried out in the reverse order. This structure can avoid a load applied to the fuel hose 49 during the step of removal of the vehicle body cover 60.

The projecting portion 64g is attached to the front frame 22 via the bracket 22b. The projecting portion 64g (more specifically, the attachment portion 64m) and the bracket 22b are covered by the front part 61 B of the side cover 61. A plurality of attachment portions 64j to which the upper edges of the front parts 61B are attached are further provided on the lowermost parts 64k of the right portion and the left portion of the center cover 64 (see FIG. 11). The upper edges of the front parts 61 B are attached to the attachment portions 64j, and thereby the side covers 61 are supported by the center cover 64. The attachment portions 64j are positioned away from the lower edge of the center cover 64. The parts formed lower than the attachment portions 64j are covered by the front parts 61B of the side covers 61. According to the structure of the front parts 61 B of the side covers 61, and the structure of the attachment portions 64j and 64m of the center cover 64, the side covers 61 can be removed prior to removal of the center cover 64, but the center cover 64 cannot be removed prior to removal of the side covers 61 during the step of removing the vehicle body cover 60.

A center part 64p of the center cover 64 in the vehicle width direction is covered by the front part 65a of the under-seat cover 65 (see FIGS. 12 and 10). The clamp 64f of the center cover 64 is similarly covered by the front part 65a of the under-seat cover 65. An attachment portion 64q to which the front part 65a of the under-seat cover 65 is attached is provided on the center part 64p of the center cover 64. Similarly, an attachment portion 64r to which the front part 65a of the under-seat cover 65 is attached is provided on the projecting portion 64g. According to this attachment structure, the under-seat cover 65 can be removed from the vehicle body in a state where the center cover 64 remains attached to the vehicle body.

As noted above, the rear frame 24R includes the clamp 24c which clamps the portion of the fuel hose 49 extending along the rear frame 24R. As illustrated in FIG. 2, the clamp 64f of the center cover 64 (position P2 held by the clamp 64f) is located closer to the fuel supply unit 34 than the intermediate position between the clamp 24c and the fuel supply unit 34 is. This structure stabilizes the position of the portion of the fuel hose 49 in the vicinity of the fuel supply unit 34.

The clamp 64f of the center cover 64 is located rearward from the front end of the fuel hose 49. The clamp 64f is located at a height equal to or slightly higher than the connection position between the fuel supply unit 34 and the fuel hose 49 (front end of the fuel hose 49) in the side view. In this example, the position P2 held by the clamp 64f is located slightly higher than the front end of the fuel hose 49 as illustrated in FIG. 2. The clamp 24c of the rear frame 24R is located higher than the position P2. This arrangement reduces a bend of the fuel hose 49.

As can be seen from FIG. 2, the rear frame 24R extends straight in the upward direction toward the rear in the side view. The clamp 64f of the center cover 64 (i.e., the position P2 of the fuel hose 49) is located substantially at the same height as the position of the front end of the rear frame 24R. In other words, the clamp 64f is located laterally from the front end of the rear frame 24R. According to this arrangement, the portion of the fuel hose 49 between the clamp 64f and the clamp 24c extends along the inclined portion 24a of the rear frame 24R in the side view. Thus, this portion of the fuel hose 49 is difficult to interfere with other units disposed above and below this portion.

As noted above, the engine bracket 22a for suspending the engine 30 is provided on the front frame 22. As illustrated in FIG. 2, the fuel supply unit 34 is located further forward than the engine bracket 22a in the side view, and the clamp 64f is located further rearward than the engine bracket 22a in the side view. According to this arrangement, a sufficient space for carrying out attachment and detachment of the fuel hose 49 can be easily secured in comparison with a structure which disposes the clamp 64f at a position overlapping with the engine bracket 22a in the side view. Moreover, an unnecessary bend of the fuel hose 49 can be eliminated by adjustment of the position of the clamp 64f, which contributes to reduction of elongation of the fuel hose 49. The engine bracket 22a is located between the clamp 64f (position P2 of the fuel hose 49) and the fuel supply unit 34 in the side view. The fuel hose 49 is located outward from the engine bracket 22a in the vehicle width direction. The space between the clamp 64f and the fuel supply unit 34 is effectively used for the layout of the engine bracket 22a.

The engine bracket 22a extends diagonally downward and outward in the vehicle width direction from the outer surface of the front frame 22 (see FIG. 3). As illustrated in FIG. 2, the clamp 64f (position P2 of the fuel hose 49) and the connection position between the fuel supply unit 34 and the fuel hose 49 are positioned higher than the lower end of the engine bracket 22a. This arrangement easily avoids interference between the fuel hose 49 and the engine bracket 22a. As illustrated in FIG. 2, the clamp 64f (position P2 of the fuel hose 49) is located lower than the upper end of the engine bracket 22a and higher than the lower end of the engine bracket 22a. According to this layout, the clamp 64f can be disposed in a space produced above the engine bracket 22a. Moreover, as illustrated in FIG. 4, the clamp 64f in this example is located rearward from an outermost part (lower end) 22c of the engine bracket 22a in the plan view. This structure can avoid interference between the fuel hose 49 and the engine bracket 22s while preventing excessive distance of the fuel hose 49 from the front frame 22.

As explained above, the fuel hose 49 is connected with the side surface of the fuel supply unit 34. More specifically, as illustrated in FIG. 4, the fuel hose 49 includes the connector 49e at the front end thereof. The connector 49e has an L shape which extends from the side surface of the fuel supply unit 34 toward the outside in the vehicle width direction, and then bends toward the rear. This structure can further securely prevent interference between the engine bracket 22a and the fuel hose 49.

As illustrated in FIG. 4, the clamp 64f (position P2 of the fuel hose 49) is located inwardly the lateral side surfaces of the crank case 31 of the engine 30 in the vehicle width direction, and above the crank case 31. According to this arrangement of the clamp 64f, the fuel hose 49 extends above the crank case 31 and thereby avoids an external force applied to the fuel hose 49 from below by using the crank case 31. Moreover, this structure can reduce the distance between the fuel supply unit 34 and the portion (P2) of the fuel hose 49 held by the clamp 64f, thereby preventing large inclination or bending of the fuel hose 49 between the corresponding portion of the fuel hose 49 and the fuel supply unit 34.

As noted above, the fuel hose 49 includes a portion (hose rear portion 49a) extending from the fuel discharge portion 41 of the fuel tank 40 toward the rear frame 24R. The clamp 51f is disposed at the upper edge of the storing box 50. The clamp 51f is located laterally from the fuel tank 40 and clamps (holds) the hose rear portion 49a of the fuel hose 49 in a position spaced upward from the rear frame 24R. This structure can reduce position change of the hose rear portion 49a of the fuel hose 49 even when the fuel discharge portion 41 provided on the upper surface of the fuel tank 40 and the rear frame 24R have a long distance therebetween.

The fuel hose 49 includes a portion extending along the rear frame 24R, and a portion (hose front portion 49d) between the fuel supply unit 34 and the portion extending along the rear frame 24R. The clamp 64f of the center cover 64 clamps the hose front portion 49d of the fuel hose 49 at a position spaced from the front frame 22 toward the outside in the vehicle width direction. According to this structure, the bend of the fuel hose 49 can be made smaller without requiring a complicated structure than a structure which clamps the fuel hose 49 to the front frame 22 such that the fuel hose 49 can extend along the front frame 22 and the inclined portion 24a of the rear frame 24R.

The clamp 24c provided on the rear frame 24R according to the foregoing description corresponds to a first clamp in the appended claims, while the clamp 64f provided on the vehicle body cover 60 corresponds to a second clamp in the appended claims.

The present teaching is not limited to the aforementioned embodiment but may be practiced otherwise in various manners.

For example, the clamp 51f of the housing box 50 can be eliminated.

The position of the clamp 64f of the vehicle body cover 60 may be located higher than the front frame 22 or lower than the front frame 22.

The bracket 22b for fixing the projecting portion 64g of the center cover 64 can be eliminated.

The position of the fuel supply unit 34 may be offset in the right direction or the left direction with respect to the front frame 22.

The clamp 64f may be provided on other covers (such as the side cover 61). In this case, the procedures for removing and attaching the plural covers constituting the vehicle body cover (such as the center cover 64 and the side covers 61) are not limited to the procedures disclosed herein. For example, the center cover 64 may be removed before separation of the side covers 61.

The fuel discharge portion 41 of the fuel tank 40 is not required to be equipped on the upper surface of the fuel tank 40. For example, the fuel discharge portion 41 may be disposed on the lower surface or the front surface of the fuel tank 40.

## Claims

1. A straddle-type vehicle, comprising:
a vehicle body cover (60);
a front frame (22) extending diagonally downward and rearward from a head pipe (21) supporting a steering shaft and forming a front part of a vehicle body frame (20);
left and right rear frames (24R,24L) forming a rear part of the vehicle body frame (20) and extending diagonally upward and rearward, wherein the left and right rear frames (24R,24L) each include a front end connected with a rear part of the front frame (22) and a front part extending diagonally rearward and outward in the vehicle width direction from the front end, and are located away from each other in the vehicle width direction;
a fuel tank (40) supported by the left and right rear frames (24R,24L);
a fuel supply unit (34) which supplies fuel to an engine (30) disposed below the front frame (22); and
a fuel hose (49) connecting a fuel discharge portion (41) of the fuel tank (40) and the fuel supply unit (34), the fuel hose (49) including a first portion that extends along one of the left and right rear frames (24R,24L) and a second portion (49d) that corresponds to a portion between the first portion and the fuel supply unit (34);
**characterized in that** the vehicle body cover (60) is provided with a clamp (64f) clamping the second portion (49d) of the fuel hose (49) at a position located away from the front frame (22) toward the outside in the vehicle width direction.

2. A straddle-type vehicle according to claim 1, **characterized in that** the vehicle body cover (60) includes a first cover (64) and a second cover (61) connected with each other, the first cover (64) includes a portion covered by the second cover (61), and the clamp (64f) is provided on the portion of the first cover (64) covered by the second cover (61).

3. A straddle-type vehicle according to claim 2, **characterized in that** the portion of the first cover (64) corresponds to the end of the first cover (64) located toward the second cover (61).

4. A straddle-type vehicle according to claim 2 or 3, **characterized in that** the second cover (61) is removable from a vehicle body in a state where the first cover (64) remains attached to the vehicle body.

5. A straddle-type vehicle according to one of the claims 2 to 4, **characterized in that** the front frame (22) includes a bracket (22b) which extends outward in the vehicle width direction, and the portion of the first cover (64) is fixed to the bracket (22b).

6. A straddle-type vehicle according to one of the claims 1 to 5, **characterized in that** the front frame (22) includes an engine bracket (22a) supporting the engine (30), the fuel supply unit (34) is located further forward than the engine bracket (22a) in the side view, and the clamp (64f) is located further rearward than the engine bracket (22a) in the side view.

7. A straddle-type vehicle according to one of the claims 1 to 6, **characterized in that** the clamp (64f) of the vehicle body cover (60) is located further inwardly in the vehicle width direction than side surfaces of a crank case (31) of the engine (30).

8. A straddle-type vehicle according to one of the claims 1 to 7, **characterized in that** the one rear frame (24R) along which the first portion of the fuel hose (49) extends includes a first clamp (24c) clamping the first portion,
the vehicle body cover (60) includes, as a second clamp, the clamp (64f) clamping the second portion (49d) of the fuel hose (49).

9. A straddle-type vehicle according to claim 8, **characterized in that** the second clamp (64f) is located toward the fuel supply unit (34) from the intermediate position between the first clamp (24c) and the fuel supply unit (34).

10. A straddle-type vehicle according to claim 8 or 9, **characterized in that** the second clamp (64f) is located laterally from the front end of the one rear frame (24R).

11. A straddle-type vehicle according to one of the claims 1 to 10, **characterized by**:
a seat (5);
a storing box (50) disposed below the seat (5);
the fuel tank (40) is disposed below the seat (5) and positioned on the rear side of the storing box (50);
the left and right rear frames (24R,24L) are supporting the storing box (50) and the fuel tank (40), the rear frames (24R,24L) positioned lower than the upper edge of the storing box (50) and the upper surface of the fuel tank (40);
a further clamp (51f) is provided to the storing box (50) and clamping the portion of the fuel hose (49), said further clamp (51f) is spaced upward from the one rear frame toward which the portion of the fuel hose (49) extends, said further clamp (51f) is located lower than the upper surface of the fuel tank (40) and located laterally from the fuel tank (40).

## Patentansprüche

1. Fahrzeug vom Spreizsitz-Typ mit:
einer Fahrzeugabdeckung (60);
einen vorderen Rahmen (22), der sich diagonal nach unten und hinten von einem Lenkkopf (21) erstreckt, der eine Lenkwelle lagert und einen vorderen Teil des Fahrzeugrahmens (20) bildet;
linke und rechte hintere Rahmen (24R, 24L), die einen hinteren Teil des Fahrzeugrahmens (20) bilden und sich diagonal nach oben und hinten erstrecken,
wobei jeder die linken und rechten hintere Rahmen (24R, 24L) jeweils ein vorderes Ende beinhalten, das mit einem hinteren Teil des vorderen Rahmens (22) verbunden ist, und ein vorderen Teil beinhalten, dar sich diagonal nach hinten und außen in Fahrzeugbreitenrichtung von dem vorderen Ende erstreckt, und voneinander entfernt in der Fahrzeugbreitenrichtung angeordnet sind;
ein Kraftstofftank (40), gelagert durch den linken und rechten hinteren Rahmen (24R, 24L);
eine Kraftstoffversorgungseinheit (34), die Kraftstoff zu einem Motor (30) führt, der unter dem vorderen Rahmen (22) positioniert ist; und
eine Kraftstoffleitung (49), verbunden mit einem Kraftstoffausgabeabschnitt (41) des Kraftstofftanks (40) und der Kraftstoffversorgungseinheit (34), die Kraftstoffleitung (49) beinhaltet einen ersten Abschnitt, der sich entlang einem der linken und rechten hinteren Rahmen (24R, 24L) erstreckt und einen zweiten Abschnitt (49d), der einen Abschnitt zwischen dem ersten Abschnitt und der Kraftstoffversorgungseinheit (34) entspricht; **dadurch gekennzeichnet, dass** die Fahrzeugabdeckung (60) mit einer Klammer (64f) versehen ist, welche den zweiten Abschnitt (49d) der Kraftstoffleitung (49) an einer Position, entfernt angeordnet von dem vorderen Rahmen (22) zu einer Außenseite in der Fahrzeugbreitenrichtung klemmt.

2. Fahrzeug vom Spreizsitz-Typ gemäß Anspruch 1, **dadurch gekennzeichnet, dass** die Fahrzeugabdeckung (60) eine erste Abdeckung (64) und eine zweite Abdeckung (61) verbunden miteinander beinhaltet, die erste Abdeckung (64) beinhaltet einen Abschnitt abgedeckt durch die zweite Abdeckung (61), und die Klammer (64f) ist an dem Abschnitt der ersten Abdeckung (64) vorgesehen, welche durch die zweite Abdeckung (61) abgedeckt ist.

3. Ein Fahrzeug vom Spreizsitz-Typ gemäß Anspruch 2, **dadurch gekennzeichnet, dass** der Abschnitt der ersten Abdeckung (64) zu dem Ende der ersten Abdeckung (64), angeordnet zu der zweiten Abdeckung (61), korrespondiert.

4. Ein Fahrzeug vom Spreizsitz-Typ gemäß Anspruch 2 oder 3, **dadurch gekennzeichnet, dass** die zweite Abdeckung (61) entfernbar von dem Fahrzeug ist, in einem Zustand, indem die erste Abdeckung (64) an dem Fahrzeug befestigt bleibt.

5. Ein Fahrzeug vom Spreizsitz-Typ gemäß einem der Ansprüche 2 bis 4, **dadurch gekennzeichnet, dass** der vordere Rahmen (22) eine Klammer (22b) beinhaltet, die sich nach außen in der Fahrzeugbreitenrichtung erstreckt, und der Abschnitt der ersten Abdeckung (64) ist an der Klammer (22b) fixiert.

6. Fahrzeug vom Spreizsitz-Typ gemäß einem der Ansprüche 1 bis 5, **dadurch gekennzeichnet, dass** der vordere Rahmen eine Motorklammer (22a) beinhaltet, welche den Motor (30) lagert, die Kraftstoffversorgungseinheit (34) ist weiter nach vorne gelagert als die Motorklammer (22a) in der Seitenansicht, und die Klammer (64f) ist weiter nach hinten angeordnet als die Motorklammer (22a) in der Seitenansicht.

7. Ein Fahrzeug vom Spreizsitz-Typ gemäß einem der Ansprüche 1 bis 6, **dadurch gekennzeichnet, dass** die Klammer (64f) und die Fahrzeugabdeckung (60) weiter nach innen in der Fahrzeugbreitenrichtung angeordnet sind als Seitenflächen eines Kurbelgehäuses (31) des Motors (30).

8. Ein Fahrzeug vom Spreizsitz-Typ gemäß einem der Ansprüche 1 bis 7, **dadurch gekennzeichnet, dass** der eine hintere Rahmen (24R) entlang dem sich der erste Abschnitt der Kraftstoffleitung (49) erstreckt, eine erste Klammer (24c) beinhaltet, welche den ersten Abschnitt klemmt, die Fahrzeugabdeckung (60) beinhaltet, als eine zweite Klammer, die Klammer (64f), welche den zweiten Abschnitt (49d) der Kraftstoffleitung (49) klemmt.

9. Ein Fahrzeug vom Spreizsitz-Typ gemäß Anspruch 8, **dadurch gekennzeichnet, dass** die zweite Klammer (64f) zu der Kraftstoffversorgungseinheit (34) angeordnet ist von der Zwischenposition zwischen der ersten Klammer (24c) und der Kraftstoffversorgungseinheit (34).

10. Ein Fahrzeug vom Spreizsitz-Typ gemäß Anspruch 8 oder 9, **dadurch gekennzeichnet, dass** die zweite Klammer (64f) seitlich von dem vorderen Ende des einen hinteren Rahmens (24R) angeordnet ist.

11. Ein Fahrzeug vom Spreizsitz-Typ gemäß einem der Ansprüche 1 bis 10, **gekennzeichnet durch**:
einen Sitz (5);
eine Staubox (50) angeordnet unter dem Sitz (5);
der Kraftstofftank (40) ist unter dem Sitz (5) angeordnet und an einer hinteren Seite der Staubox (5) positioniert;
die linken und rechten hinteren Rahmen (24R, 24L) lagern die Staubox (50) und den Kraftstofftank (40), die hinteren Rahmen (24R, 24L) sind niedriger als die obere Kante der Staubox (50) und der oberen Fläche des Kraftstofftanks (40) angeordnet;
eine weitere Klammer (51f) ist an der Staubox (50) vorgesehen und klemmt den Abschnitt der Kraftstoffleitung (49), diese weitere Klammer (51f) ist nach oben von dem einen hinteren Rahmen zudem sich der Abschnitt der Kraftstoffleitung (49) erstreckt, beabstandet, diese weitere Klammer (51f) ist niedriger angeordnet als die obere Fläche des Kraftstofftanks (40) und seitlich von dem Kraftstofftank (40) angeordnet.

## Revendications

1. Véhicule de type à enfourcher comprenant :
un capot de corps de véhicule (60) ;
un cadre avant (22) s'étendant diagonalement vers le bas et vers l'arrière depuis un tube de tête (21) supportant un arbre de direction et formant une partie avant d'un cadre de corps de véhicule (20) ;
des cadres arrière gauche et droit (24R, 24L) formant une partie arrière du cadre de corps de véhicule (20) et s'étendant diagonalement vers le haut et vers l'arrière, dans lequel les cadres arrière gauche et droit (24R, 24L) comportent chacun une extrémité avant reliée à la partie arrière du cadre avant (22) et une partie avant s'étendant diagonalement vers l'arrière et vers l'extérieur dans le sens de la largeur du véhicule depuis l'extrémité avant, et sont éloignés l'un de l'autre dans le sens de la largeur du véhicule ;
un réservoir de carburant (40) supporté par les cadres arrière gauche et droit (24R, 24L) ;
une unité d'alimentation en carburant (34) qui fournit un carburant à un moteur (30) disposé en dessous du cadre avant (22) ; et
un tuyau de carburant (49) reliant une partie d'évacuation de carburant (41) du réservoir de carburant (40) et l'unité d'alimentation en carburant (34), le tuyau de carburant (49) incluant une première partie s'étendant le long de l'un des cadres arrière gauche et droit (24R, 24L) et une seconde partie (49d) qui correspond à une partie située entre la première partie et l'unité d'alimentation en carburant (34) ;
**caractérisé en ce que** le capot de corps de véhicule (60) est muni d'une pince (64f) qui pince la seconde partie (49d) du tuyau de carburant (49) dans une position disposée à l'écart du cadre avant (22) vers l'extérieur dans le sens de la largeur du véhicule.

2. Véhicule de type à enfourcher selon la revendication 1, **caractérisé en ce que** le capot de corps de véhicule (60) comporte un premier capot (64) et un second capot (61) reliés l'un à l'autre, le premier capot (64) comporte une partie recouverte par le second capot (61), et la pince (64f) est disposée sur la partie du premier capot (64) recouverte par le second capot (61).

3. Véhicule de type à enfourcher selon la revendication 2, **caractérisé en ce que** la partie du premier capot (64) correspond à l'extrémité du premier capot (64) disposée vers le second capot (61).

4. Véhicule de type à enfourcher selon la revendication 2 ou 3, **caractérisé en ce que** le second capot (61) est amovible par rapport au corps de véhicule dans un état où le premier capot (64) reste fixé au corps de véhicule.

5. Véhicule de type à enfourcher selon l'une des revendications 2 à 4, **caractérisé en ce que** le cadre avant (22) comporte une console (22b) qui s'étend vers l'extérieur dans le sens de la largeur du véhicule et la partie du premier capot (64) est fixée à la console (22b).

6. Véhicule de type à enfourcher selon l'une des revendications 1 à 5, **caractérisé en ce que** le cadre avant (22) comporte une console de moteur (22a) supportant le moteur (30), l'unité d'alimentation en carburant (34) est disposée plus en avant que la console de moteur (22a), vue de côté, et la pince (64f) est disposé plus en arrière que la console de moteur (22a), vue de côté.

7. Véhicule de type à enfourcher selon l'une des revendications 1 à 6, **caractérisé en ce que** la pince (64f) du capot de corps de véhicule (60) est disposée plus vers l'intérieur dans le sens de la largeur du véhicule que les surfaces latérales du carter (31) du moteur (30).

8. Véhicule de type à enfourcher selon l'une des revendications 1 à 7, **caractérisé en ce que** le cadre arrière (24R) le long duquel s'étend la première partie du tuyau de carburant (49) comporte une première pince (24c) qui pince la première partie,
le capot de corps de véhicule (60) comporte, en tant que seconde pince, la pince (64f) qui pince la seconde partie (49d) du tuyau de carburant (49).

9. Véhicule de type à enfourcher selon la revendication 8, **caractérisé en ce que** la seconde pince (64f) est disposée vers l'unité d'alimentation en carburant (34) depuis la position intermédiaire entre la première pince (24c) et l'unité d'alimentation en carburant (34).

10. Véhicule de type à enfourcher selon la revendication 8 ou 9, **caractérisé en ce que** la seconde pince (64f) est disposée latéralement par rapport à l'extrémité avant du cadre arrière (24R).

11. Véhicule de type à enfourcher selon l'une des revendications 1 à 10, **caractérisé par** une selle (5) ;
une boîte de rangement (50) disposée en dessous de la selle (5) ;
le réservoir de carburant (40) est disposé en dessous de la selle (5) et positionné sur le côté arrière de la boîte de rangement (50) ;
les cadres arrière gauche et droit (24R, 24L) supportent la boîte de rangement (50) et le réservoir de carburant (40), les cadres arrière (24R, 24L) sont positionnés plus bas que le bord supérieur de la boîte de rangement (50) et la surface supérieure du réservoir de carburant (40) ;
une autre pince (51f) est disposée sur la boîte de rangement (50) et pince la partie du tuyau de carburant (49), ladite autre pince (51f) est espacée vers le haut par rapport au cadre arrière vers lequel s'étend le tuyau de carburant (49), ladite autre pince (51f) est disposée plus bas que la surface supérieure du réservoir de carburant (40) et disposée latéralement par rapport au réservoir de carburant (40).
